# EUROPEAN PATENT APPLICATION

(11) **EP 2 134 083 A1**
(43) Date of publication of application: **16.12.2009**
(21) Application number: 08290546.4
(22) Date of filing: 12.06.2008
(51) Int. Cl.: H04N 5/445, G06F 3/023

(54) **Method and system for switching between video sources**

(71) Applicant: Alcatel Lucent, 75008 Paris (FR)
(72) Inventor: Tytgat, Donny, 8710 Ooigem (BE)
(74) Representative: D'Halleweyn, Nele Veerle Trees Gertrudis

(57) **Abstract**

Method for switching from a first video source to a second video source, the first video source producing first video content being displayed to a user, and the second video source producing second video content, wherein a changing view of a polyhedron with first and second substantially rectangular surfaces is displayed starting with at least a view of the first surface and changing the direction under which the polyhedron is viewed until only the second surface is displayed; the first video content and the second video content are mapped on the first and second surfaces of the polyhedron, respectively, so that at least the first video content is displayed at least at the beginning of the changing view and the second video content is displayed at least at the end of the changing view.

## Description

The present invention relates to a method and system for switching from a first video source to a second video source. The invention further relates to an IPTV set-top box comprising such a system.

The existing user interfaces for browsing video content from different video sources do not provide an intuitive user experience. When a user tunes into a video source, the video content produced by this source is abruptly presented to the user, immediately switching to full screen video. This way of switching creates an urgency for the user to see something quickly as the user was pulled out of the existing user interface contact and is presented with nothing during switching. This in turn creates stringent requirements for issues such as channel switching speed on network-based video sources, such as IPTV. Further the usage of channels selected on the basis of the context (user context, which is a profile combined with environment context, such as the current channel, the current time, etc.) requires an intuitive interface for displaying and switching to such channels. This is lacking in the existing switching systems.

The current switching solutions are based on 2D visualization, wherein switching to a selected video source is done immediately. When the selected source is not yet available, the user simply has to wait. In other words, when selecting a new channel the user is immediately pulled out of the present user interface context and has to wait until the system is ready to show the selected video content.

Further, when context channels are available, they are usually shown in a 1D list which does not entice the user to fully exploit these features.

The object of the invention is to provide a system and a method according to the preamble, improving the user experience during switching, and interacting with the video viewing system in an intuitive way.

To reach this object the method of the invention is distinguished in that when switching from a first video source with first video content to a second video source with second video content:
- a changing view of a polyhedron with first and second substantially rectangular surfaces is displayed starting with at least a view of the first surface and changing the direction under which the polyhedron is viewed until only the second surface is displayed;
- the first video content and the second video content are mapped on the first and second surfaces of the polyhedron, respectively, so that at least the first video content is displayed at least at the beginning of the changing view and the second video content is displayed at least at the end of the changing view.

In other words the 2D user interface of the prior art is extended to a 3D user interface, enabling a number of intuitive mechanism for interacting with the video viewing system. The idea is that only one of the faces is visible to the user when watching video content without switching and that the polyhedron is rotated when switching to different video content. Such a changing view is animating for the user and eliminates the abrupt switches in the systems of the prior art. Further, such a method loosens requirements such as channel switching times in case of streamed video sources from a network.

The expressions "changing the direction under which the polyhedron is viewed" and "rotating the polyhedron" imply that the user sees a number of different images showing both the first and second surface. Note that the polyhedron may be physically rotated to create such a series of images, but that it is also possible to move the camera in order to change the direction under which the polyhedron is viewed, creating a similar visual effect.

Note further that at the beginning of the changing view the first surface may first be displayed full screen for a fixed or variable time before starting the movement of the polyhedron on the screen, and that at the end of the changing view the second surface may be displayed full screen for a fixed or variable time.

According to a possible embodiment, the method is envisioned to being a best effort approach, making the polyhedron movement times consistent and not dependable on the video content switching time. In such a case the polyhedron movement time is fixed to e.g. 200ms, and the switched to second video is shown when it is available - this could be, for example, within 50ms, but on rare cases also 250ms. In the latter case, at the end of the changing view, the second surface will first be displayed full screen with the animation content (such as texture content) during 50 ms, and next with the second video content. However, instead of working with a fixed polyhedron movement time (as described above), it is also possible to work with a dynamic polyhedron movement time, e.g. adapting the time of the polyhedron movement to the time necessary for obtaining the second video content.

According to a possible embodiment, the polyhedron is projected on a background and displayed together with the background. Other fields such as information fields with e.g. textual information about the first video content and the second video content may also be projected on the background, preferably also being overlaid on the polyhedron. Such information fields may also contain information about context dependent programs. In that way the user can be presented with additional information or animation during switching and will not get the impression that he has to wait before being able to watch the second video content.

According to a preferred embodiment of the method of the invention, a texture or animation content is mapped on the second surface before mapping the second video content on the second surface, in such a way that the texture or animation content is displayed on the second surface at the beginning of the changing view and the second video content is displayed at least at the end of the changing view. In that way, any delays for obtaining the second video content are hidden for the user.

According to a preferred aspect of the invention, when a user wants to switch through the video sources in a regular linear order (as in regular video viewing systems), the first and second surfaces are adjacent, and the polyhedron is rotated to the left or to the right, depending on whether the channel number is increased or decreased. In other words the second video content will be mapped on the left or right surface with respect to the first surface, and the polyhedron is rotated around a vertical axis to the left or to the right.

According to another preferred aspect of the invention, when a user wants to switch to a context selected channel, the first and second surfaces are adjacent and the polyhedron is rotated up or down. In other words the second video content will be mapped on the top or bottom surface with respect to the first surface, and the polyhedron is rotated around a horizontal axis.

The polyhedron is preferably cuboid, wherein the above-mentioned changing views show a rotation of the cuboid over 90 degrees.

According yet another preferred aspect of the invention, directly switching to a certain channel (e.g. by inputting the channel number on a control device), causes a rotation of the cuboid over 180 or 360 degrees, e.g. dependent on the second video content.

According to further developed embodiments of the method of the invention, the polyhedron may be displayed both rotating and translating to ensure or enhance the user experience. Generally, the displayed polyhedron may undergo any 3D movement, as long as the changing view starts with the first surface and end with the second surface.

Further the polyhedron may be morphed while changing the direction under which the polyhedron is viewed. In that way a seamless transition is provided, enabling a full screen view of the video at the face of the polyhedron that is rotated towards the viewing frustum. This face will typically have the correct aspect ratio. Further the shape of the polyhedron may be changed while changing the direction under which the polyhedron is viewed. Also the shape could be different depending on the type of switching that is performed.

The invention further relates to a system which is distinguished in that the system comprises:
- a tuner for obtaining first video content from a first video source and second video content from a second video source;
- a composing means receiving said first video content and second video content from the tuner, and arranged for mapping the first video content and the second video content on first and second substantially rectangular surfaces of a polyhedron, respectively;
- an image generating and processing means for providing images to a display unit showing the polyhedron starting with the first surface and further displaying a changing view of the polyhedron, until only the second surface is visible.

Advantageous embodiments of the system of the invention are disclosed in the dependent claims 11-14.

Finally the present invention relates to an IPTV set-top box comprising such a system.

The accompanying drawings are used to illustrate presently preferred non-limiting exemplary embodiments of the present invention. The above and other advantages features and objects of the invention will become more apparent and the invention will be better understood from the following detailed description when read in conjunction with the accompanying drawings in which:
- Figures 1A-1D illustrate schematically an embodiment of the method of the invention;
- Figure 2 shows a flowchart of a preferred embodiment of the method of the invention;
- Figure 3 is a schematic diagram of an embodiment of the system of the invention.

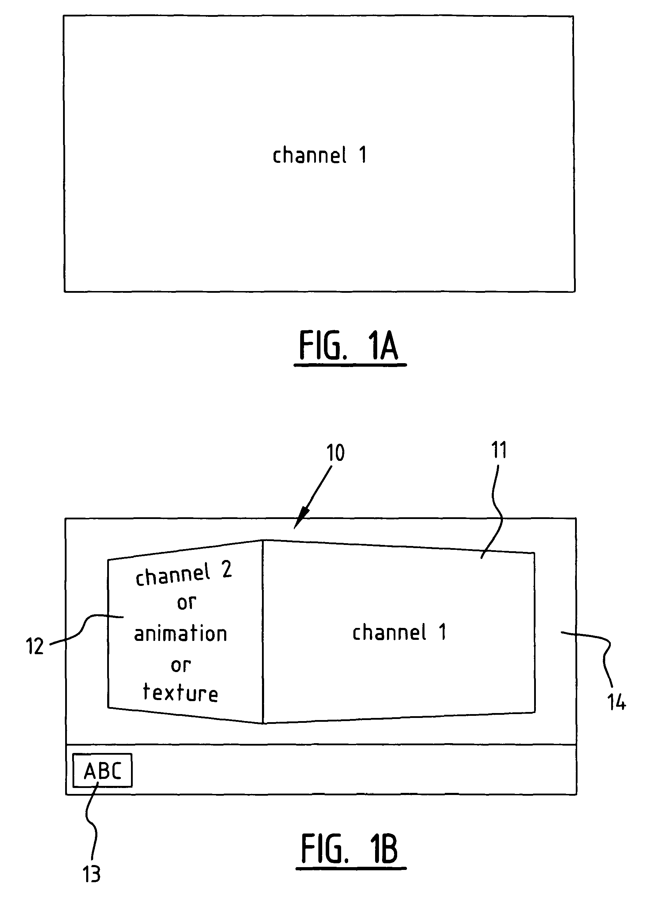

Figure 1A illustrates the situation where the user is watching a first video source, e.g. channel 1. The video content corresponding with channel 1 is displayed full screen. The video content corresponding to channel 1 is mapped on a first surface 11 of a cuboid 10, and video content corresponding to channel 2 or animation content is mapped on a second surface 12 of the cuboid. The cuboid 10 is projected on a background 14, wherein textual information 13 may be overlaid on this background 14. When it is decided to switch from channel 1 to channel 2, this composed image with the cuboid 10 on a background 14 is displayed as shown in Figure 1B. The cuboid 10 is displayed as being gradually rotated, starting with a full screen view of channel 1 and ending with a full screen view of channel 2 as illustrated in figures 1A-D.

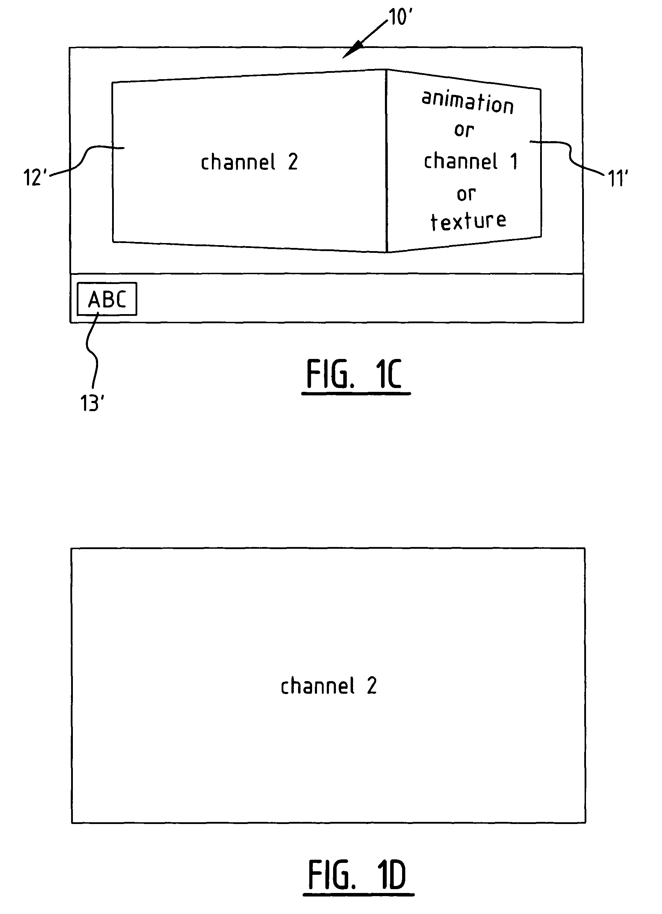

The example of Figure 1 illustrates a rotation from left to right over 90 degrees, but the skilled person will understand that many other rotations are possible, such as a rotation up or down over 90 degrees or rotations over 180 or 360 degrees. Also the polyhedron can be e.g. a prism with any number of side faces, in which case the angles of rotation will be different.

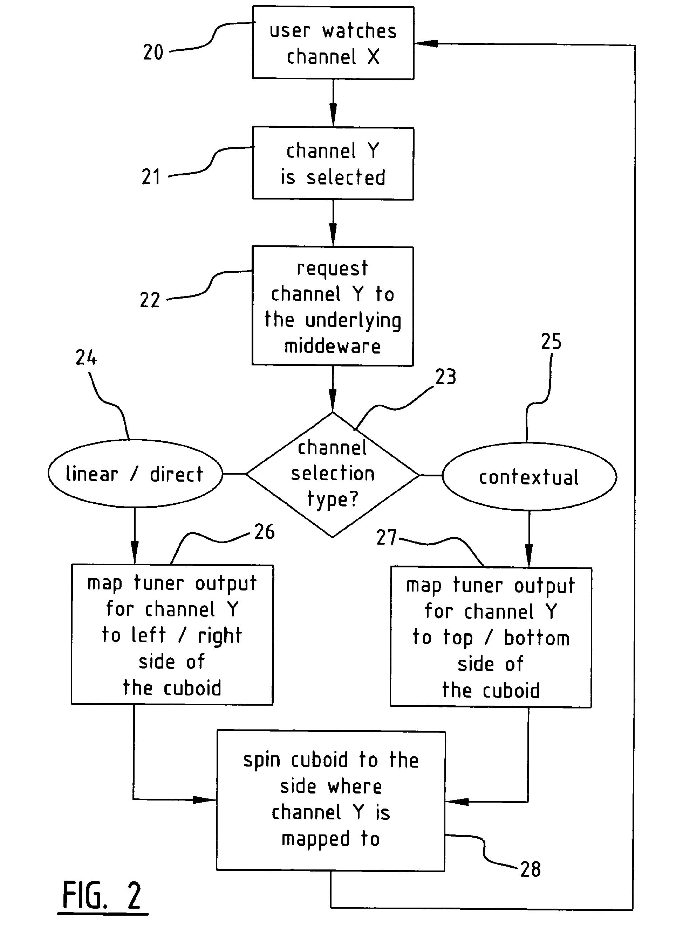

The different method steps will now be set out in detail referring to Figure 2. It is assumed that a user is watching channel X, see step 20. In step 21 channel Y is selected. Note that this channel selection can be evoked either by a user event or by a system event.

Upon the selection of channel Y, a request for channel Y is sent to the underlying middleware, see step 22. The delay between the requesting of channel Y and the time the channel is ready for visualization is dependent on the middleware system used. In case of streamed video sources such as IPTV the delay is usually non-negligible.

In a next step 23 the channel selection type is determined. In case of a linear or direct channel selection 24, channel Y will be mapped on the left or right side of the cuboid (step 26). The reference to the left or right side is with respect to the front side on which channel X is mapped. A linear channel selection denotes the selection of channel Y based on the linear relationship it has with channel X. Such a linear channel selection can for example be done by pressing the channel up or down button of the remote control. A direct channel selection denotes the selection of channel Y by means of a direct identifier of this channel. Such a direct selection can for example be done by pressing the channel button on the remote control.

If the channel type is contextual (step 25), channel Y is mapped to the top or bottom side of the cuboid (step 27). A contextual channel selection denotes the selection of channel Y based on a relationship between channel Y and a certain context, such as the current channel X, user preferences, time of the day, etc. If the channel Y content is not yet available in steps 26, 27 because of the delay mentioned above an animation, predefined texture, or other textual information may be mapped to the side of the cuboid.

In step 28 the cuboid is spun to the side where channel Y is mapped to. According to a variant an animation or texture could be shown on the second side of the cuboid during the first part of the rotation of the cuboid, while during the second part of the rotation the content of channel 2 is mapped on this side.

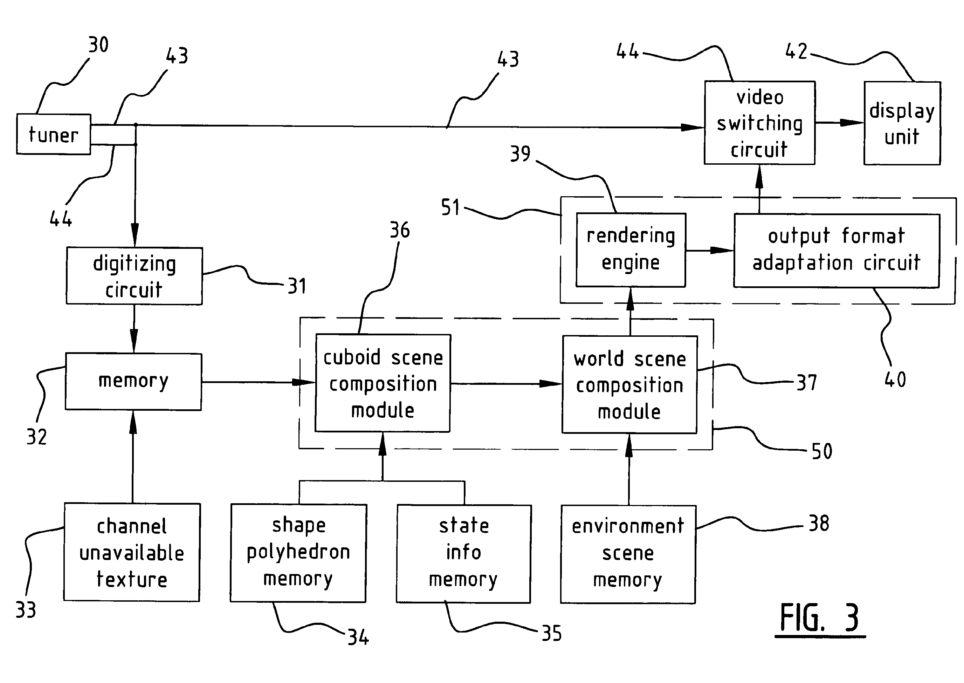

Now an embodiment of the system of the invention will be described in detail with reference to Figure 3. The system comprises a tuner 30 for obtaining the content of the different video sources. Outside the video source switching operation, the tuner 30 will output the currently selected channel that is being watched via line 43. During channel switching, the channel that the user is switching away from is output via line 43, while the channel that the user switches to is output via line 44. If the output of the tuner is not in a suitable digitized format a digitizing circuit 31 is provided for treating the output of the tuner.

The digitized channel content received from the digitized circuit 31 is stored in a memory 32. Further a "channel unavailable" texture or animation 33 is stored in memory 32 for the situation where the selected channel is not yet available due to delays.

Composer means 50 comprise a cuboid scene composition module 36 receiving the video content of the channel that the user is switching away from together with the video content of the channel that the user switches to (or the channel unavailable texture if applicable), together with the shape of a polyhedron stored in a memory 34. The composition module 36 is arranged for mapping the respective video content on the polyhedron shape, typically taking into account the state of the cuboid including the channel switching state. The composition module 36 may be arranged to perform shape transformations according to the state information, for example. The state information will typically comprise any information necessary for creating a correct view of the polyhedron in time and may amongst others comprise the following information:
- information about there being a rotation in progress or not;
- information about the progress of a rotation, such as the current time in the rotation process - based on this time information it will be possible to determine the position of the polyhedron;
- the type of channel selection;
- the aspect ratio of the target video; etc.

The composer means 50 further comprise a world scene composition module 37, where the cuboid scene from module 36 is overlaid on a background received from an environment scene memory 38.

The so composed scene is fed into a rendering engine 39, where the composed scene is put in a suitable digitized format. This formatted scene is output to an adaption circuit 40 for making the format compatible with the display unit. The output from the adaption circuit 40 is received by a video switching circuit 41 which will select the video source depending on the current state. When no channel switch is being performed, line 43 could be selected e.g. for optimization purposes.

While the principles of the invention have been set out above in connection with specific embodiments, it is to be clearly understood that this description is merely made by way of example and not as a limitation of the scope of protection which is determined by the appended claims.

## Claims

1. Method for switching from a first video source to a second video source, the first video source producing first video content being displayed to a user, and the second video source producing second video content, **characterized in that**
- a changing view of a polyhedron with first and second substantially rectangular surfaces is displayed starting with at least a view of the first surface and changing the direction under which the polyhedron is viewed until only the second surface is displayed;
- the first video content and the second video content are mapped on the first and second surfaces of the polyhedron, respectively, so that at least the first video content is displayed at least at the beginning of the changing view and the second video content is displayed at least at the end of the changing view.

2. Method according to claim 1, **characterized in that** changing the direction under which the polyhedron is viewed comprises rotating the polyhedron with respect to the viewing direction or vice versa.

3. Method according to claim 1 or 2, **characterized in that** the view of the polyhedron is overlaid on a background and displayed together with the background.

4. Method according to claim 3, **characterized in that** one or more information fields are overlaid on the background, and preferably on the background and the polyhedron.

5. Method according to any of the claims 1-4, **characterized in that** animation video content is mapped on the second surface before mapping the second video content on the second surface, in such a way that the animation content is displayed at the beginning of the changing view and the second video content is displayed at least at the end of the changing view.

6. Method according to any of the claims 1-5, wherein the second video source is in linear relationship with the first video source, **characterized in that** the second surface is a left (or right) surface with respect to the first surface, wherein the polyhedron is displayed rotating around a vertical axis.

7. Method according to any of the claims 1-5, wherein the second video source is in contextual relationship with the first video source, **characterized in that** the second surface is a top (or bottom) surface with respect to the first surface, wherein the polyhedron is displayed rotating around a horizontal axis.

8. Method according to any of the claims 1-7, **characterized in that** the view of the polyhedron displays both a rotation and a translation of the polyhedron.

9. Method according to any of the claims 1-8, **characterized in that** de polyhedron is morphed while changing the direction under which the polyhedron is viewed.

10. Method according to any of the claims 1-9, **characterized in that** the shape of the polyhedron is changed while changing the direction under which the polyhedron is viewed.

11. System for switching from a first video source to a second video source, comprising:
- a tuner for obtaining first video content from a first video source and second video content from a second video source;
- a composing means receiving said first video content and second video content from the tuner, and arranged for mapping the first video content and the second video content on first and second substantially rectangular surfaces of a polyhedron, respectively;
- a image generating and processing means for providing images to a display unit showing the polyhedron starting with the first surface and further showing a changing view of the polyhedron until only the second surface is visible.

12. Method according to claim 11, **characterized in that** the system is further arranged for performing the method of any of the claims 1-10.

13. System of any of the claims 11-12, further comprising a remote control with channel up/down buttons for switching from a first to a second video source, **characterized in that** the channel up/down buttons are coupled with the composing means for mapping the second video content on a left, or right surface with respect to the first surface, when the channel up button or channel down button is pressed, respectively, and wherein the image generating and processing means are arranged for providing images to a display unit showing the polyhedron being rotated around a vertical axis.

14. System of any of the claims 11-13, further comprising a remote control with up/down buttons for switching from a first to a context-related second video source, **characterized in that** the up/down buttons are coupled with the composing means for mapping the second video content on a top, or bottom surface with respect to the first surface, when the up button or down button is pressed, respectively, and wherein the image generating and processing means are arranged for providing images to a display unit showing the polyhedron being rotated around a horizontal axis.

15. IPTV set-top box comprising a system according to any of the claims 11-12.

## Amended claims

### Amended claims in accordance with Rule 137(2) EPC.

**1.** Method for switching from a first video source to a second video source, the first video source producing first video content being displayed to a user (20), and the second video source producing second video content, **characterized in that**
- a changing view of a polyhedron with first and second substantially rectangular surfaces is displayed starting with at least a view of the first surface and changing the direction under which the polyhedron is viewed until only the second surface is displayed (28);
- the first video content and the second video content are mapped on the first and second surfaces of the polyhedron, respectively, so that at least the first video content is displayed at least at the beginning of the changing view and the second video content is displayed at least at the end of the changing view.

**2.** Method according to claim 1, **characterized in that** changing the direction under which the polyhedron is viewed comprises rotating the polyhedron with respect to the viewing direction or vice versa.

**3.** Method according to claim 1 or 2, **characterized in that** the view of the polyhedron is overlaid on a background and displayed together with the background.

**4.** Method according to claim 3, **characterized in that** one or more information fields are overlaid on the background, and preferably on the background and the polyhedron.

**5.** Method according to any of the claims 1-4, **characterized in that** animation video content is mapped on the second surface before mapping the second video content on the second surface, in such a way that the animation content is displayed at the beginning of the changing view and the second video content is displayed at least at the end of the changing view.

**6.** Method according to any of the claims 1-5, wherein the second video source is in linear relationship with the first video source, **characterized in that** the second surface is a left (or right) surface with respect to the first surface, wherein the polyhedron is displayed rotating around a vertical axis.

**7.** Method according to any of the claims 1-5, wherein the second video source is in contextual relationship with the first video source, **characterized in that** the second surface is a top (or bottom) surface with respect to the first surface, wherein the polyhedron is displayed rotating around a horizontal axis.

**8.** Method according to any of the claims 1-7, **characterized in that** the view of the polyhedron displays both a rotation and a translation of the polyhedron.

**9.** Method according to any of the claims 1-8, **characterized in that** de polyhedron is morphed while changing the direction under which the polyhedron is viewed.

**10.** Method according to any of the claims 1-9, **characterized in that** the shape of the polyhedron is changed while changing the direction under which the polyhedron is viewed.

**11.** System for switching from a first video source to a second video source, comprising:
- a tuner (30) for obtaining first video content from a first video source and second video content from a second video source;
- a composing means (50) receiving said first video content and second video content from the tuner, and arranged for mapping the first video content and the second video content on first and second substantially rectangular surfaces of a polyhedron, respectively;
- a image generating and processing means (40) for providing images to a display unit showing the polyhedron starting with the first surface and further showing a changing view of the polyhedron until only the second surface is visible.

**12.** Method according to claim 11, **characterized in that** the system is further arranged for performing the method of any of the claims 1-10.

**13.** System of any of the claims 11-12, further comprising a remote control with channel up/down buttons for switching from a first to a second video source, **characterized in that** the channel up/down buttons are coupled with the composing means for mapping the second video content on a left, or right surface with respect to the first surface, when the channel up button or channel down button is pressed, respectively, and wherein the image generating and processing means are arranged for providing images to a display unit showing the polyhedron being rotated around a vertical axis.

**14.** System of any of the claims 11-13, further comprising a remote control with up/down buttons for switching from a first to a context-related second video source, **characterized in that** the up/down buttons are coupled with the composing means for mapping the second video content on a top, or bottom surface with respect to the first surface, when the up button or down button is pressed, respectively, and wherein the image generating and processing means are arranged for providing images to a display unit showing the polyhedron being rotated around a horizontal axis.

**15.** IPTV set-top box comprising a system according to any of the claims 11-12.
